(19) Europäisches Patentamt

European Patent Office

Office européen des brevets

(11) Veröffentlichungsnummer: **0 212 733 B1**

# (12) EUROPÄISCHE PATENTSCHRIFT

(45) Veröffentlichungstag der Patentschrift: **05.01.94**

(21) Anmeldenummer: **86201355.4**

(22) Anmeldetag: **01.08.86**

(51) Int. Cl.⁵: **H04N 5/32**

(54) **Verfahren zur Erzeugung einer Röntgenaufnahme mittels eines Fotoleiters und Anordnung zur Durchführung des Verfahrens.**

(30) Priorität: **14.08.85 DE 3529108**

(43) Veröffentlichungstag der Anmeldung:
**04.03.87 Patentblatt 87/10**

(45) Bekanntmachung des Hinweises auf die Patenterteilung:
**05.01.94 Patentblatt 94/01**

(84) Benannte Vertragsstaaten:
**DE FR GB NL**

(56) Entgegenhaltungen:
**US-A- 3 602 641**

**PYSICS IN MEDICINE & BIOLOGY, Band 29, Nr. 6, Juni 1984, Seiten 703-709, Bristol, GB; G.B. FALLONE et al.: "Image subtraction by solid state electroradiography."**

**PATENT ABSTRACTS OF JAPAN, Band 7, Nr. 72 (E-166)(1217), 25. März 1983; & JP-A- 57212877 (CANON K.K.) 27.12.1982**

(73) Patentinhaber: **Philips Patentverwaltung GmbH**
**Wendenstrasse 35c**
**D-20097 Hamburg(DE)**

(84) Benannte Vertragsstaaten:
**DE**

(73) Patentinhaber: **N.V. Philips' Gloeilampenfa-**
**brieken**
**Groenewoudseweg 1**
**NL-5621 BA Eindhoven(NL)**

(84) Benannte Vertragsstaaten:
**FR GB NL**

(72) Erfinder: **Conrads, Norbert**
**Stöck 9**
**B 47 29 Hauset(BE)**
Erfinder: **Hillen, Walter, Dr.**
**Binsenweg 2**
**D-5100 Aachen(DE)**
Erfinder: **Ouadflieg, Peter**
**Kirchrather Strasse 41**
**D-5100 Aachen(DE)**
Erfinder: **Schiebel, Ulrich, Dr.**
**Zehntweg 60**
**D-5100 Aachen(DE)**

(74) Vertreter: **Hartmann, Heinrich, Dipl.-Ing. et al**
**Philips Patentverwaltung GmbH,**
**Wendenstrasse 35c**
**D-20097 Hamburg (DE)**

EP 0 212 733 B1

## Beschreibung

Die Erfindung betrifft ein Verfahren nach dem Oberbegriff des Anspruchs 1 sowie eine Anordnung zur Durchführung dieses Verfahrens.

Ein solches Verfahren und eine solche Anordnung sind in der Zeitschrift SPIE Vol. 454 Application of Optical Instrumentation in Medicine XII (1984) Seiten 265 bis 270 sowie aus der US-A-4,134 137 bekannt. Das zweidimensionale auf der Oberfläche des Fotoleiters erzeugte Ladungsmuster, das im wesentlichen der räumlichen Verteilung der Röntgenstrahlungsintensität entspricht, wird von einer Elektrometeranordnung abgetastet und in ein elektrisches Signal umgesetzt. Das elektrische Signal wird verstärkt, gefiltert, digitalisiert und in einem Speicher gespeichert. Es ist dann der digitalen Bildverarbeitung zugänglich.

Der Fotoleiter ist normalerweise ein Nichtleiter. Wird er jedoch einer Röntgenstrahlung ausgesetzt, dann nimmt seine Leitfähigkeit während der Bestrahlung an den bestrahlten Stellen zu, so daß an diesen Stellen die durch eine vorherige Aufladung erzeugte Ladungsdichte verringert, und zwar um so mehr, je größer die Intensität der Röntgenstrahlung ist und je länger sie auf den Fotoleiter einwirkt, d.h. je größer die Dosis an der betreffenden Stelle ist. Ein wesentliches Problem bei einem solchen Abbildungssystem besteht in den Defektstellen in der Fotoleiterschicht, die dazu führen, daß das entstehende Bild eine große Anzahl von punktförmigen Artefakten aufweist. An diesen Defektstellen stellen sich - hervorgerufen beispielsweise durch kleine leitfähige Bereiche im Fotoleitermaterial - lokale Ladungsdefizite ein.

Aufgabe der vorliegenden Erfindung ist es, ein Verfahren zu schaffen und eine Anordnung zur Durchführung des Verfahrens anzugeben, wobei der Einfluß der Defektstellen auf das Röntgenbild verringert wird.

Ausgehend von einem Verfahren der eingangs genannten Art wird diese Aufgabe durch die im Anspruch 1 angegebenen Maßnahmen gelöst.

Die Erfindung basiert auf der Erkenntnis, daß die Defektstellen sowohl im Röntgenbild als auch im Dunkelentladungsbild an der gleichen Stelle Störeffekte ergeben. Subtrahiert man daher das Dunkelentladungsbild von dem Röntgenbild Bildpunkt für Bildpunkt, dann ergibt sich ein korrigiertes Röntgenbild, bei dem die Artefakte an den Defektstellen zumindest weniger ausgeprägt sind.

Eine nähere Untersuchung der Defektstellen hat gezeigt, daß die Abweichung der Ladungsdichte an der Defektstelle gegenüber einer defektfreien Stelle von der Intensität der Röntgenstrahlung abhängt: Die Abweichung ist um so geringer, je größer die Dosis bei der Röntgenaufnahme ist, d.h. je größer die Entladung und je geringer die Ladungsdichte ist. Wenn daher die Bildwerte des Dunkelentladungsbildes unmittelbar von den Bildwerten des Röntgenbildes subtrahiert werden, ergibt sich eine "Überkompensation". Während die Defektstellen in einem nicht korrigierten Röntgenbild also so erscheinen, als wären sie von einer überhöhten Strahlungsintensität getroffen worden, erscheinen die Defektstellen in dem durch unmittelbare Subtraktion erzeugten Röntgenbild so als wären sie mit im Vergleich zur Umgebung verringerter Intensität bestrahlt worden - wobei allerdings die Abweichung gegenüber dem Normalwert im letztgenannten Fall verringert ist.

Um diesen verbleibenden Restfehler zu beseitigen, sieht die Erfindung auch vor, daß die Bildwerte des Dunkelentladungsbildes mit einem von der Ladungsdichte des zugeordneten Bildpunktes bei der Röntgenaufnahme abhängigen Korrekturfaktor multipliziert werden, der um so kleiner ist, je geringer die Ladungsdichte bei der Röntgenaufnahme ist.

Das Dunkelentladungsverhalten des Fotoleiters kann sich durch Röntgenbelichtung verändern. Es muß daher in gewissen Abständen immer wieder neu erfaßt werden - vorzugsweise nach jeder Aufnahme, wobei bei zeitlich dicht aufeinanderfolgenden Aufnahmen gegebenenfalls darauf verzichtet werden kann. Da die Änderung des Dunkelentladungsverhaltens um so ausgeprägter ist, je größer die dem Fotoleiter verabfolgte Dosis ist, ist es auch möglich, die Entscheidung für die Aufnahme eines Dunkelentladungsbildes von der Höhe der Entladung bei den einzelnen Röntgenaufnahmen abhängig zu machen.

Als Fotoleiter wird bei der Erfindung vorzugsweise Selen verwendet; jedoch kann die Erfindung auch bei anderen Fotoleitern, z.B. aus Bleioxid, benutzt werden.

Zur Bestimmung des Korrekturfaktors als Funktion der Ladungsdichte wird vorzugsweise eine Anzahl von Röntgenaufnahmen erstellt, wobei die gesamte Fotoleiterschicht mit jeweils einer bestimmten Dosis belichtet und für die dabei an den defektfreien Stellen jeweils gemessene Ladungsdichte als Korrekturwert der Wert gespeichert wird, der sich aus dem Quotienten der Differenz zwischen dieser Ladungsdichte und der Ladungsdichte an einer Defektstelle zu der entsprechenden Differenz im Dunkelentladungsbild ergibt, und wobei die Bildwerte des Dunkelentladungsbildes mit den so ermittelten Korrekturfaktoren multipliziert werden, bevor sie von den Bildwerten des Röntgenbildes subtrahiert werden.

Es hat sich gezeigt, daß die Anzahl der Defektstellen und die Amplitude der durch sie verursachten Artefakte überproportional mit der elektrischen Feldstärke in der Fotoleiterschicht zunimmt. Auf der anderen Seite steigt das Signalrauschverhältnis aber auch mit der Feldstärke. Eine bevorzugte Weiterbildung der Erfindung sieht daher vor, daß die Aufladespannung und die Dicke der Selenschicht so gewählt sind, daß die Feldstärke in der Selenschicht zwischen 2 Volt/$\mu$m und 4 Volt/$\mu$m liegt.

Eine Anordnung zur Durchführung des erfindungsgemäßen Verfahrens ist in Anspruch 4 angegeben.

Die Erfindung wird nachstehend anhand der Zeichnung näher erläutert. Es zeigen:

Fig. 1    eine Röntgenuntersuchungsanordnung, bei der das erfindungsgemäße Verfahren angewandt werden kann,

Fig. 2    das Ladungsdichteprofil entlang einer Geraden, auf der sich eine Defektstelle befindet, bei Bestrahlung mit verschiedenen Dosen,

Fig. 3    den Verlauf des Korrekturfaktors als Funktion der Dosis,

Fig. 4    eine Anordnung zur Durchführung des erfindungsgemäßen Verfahrens.

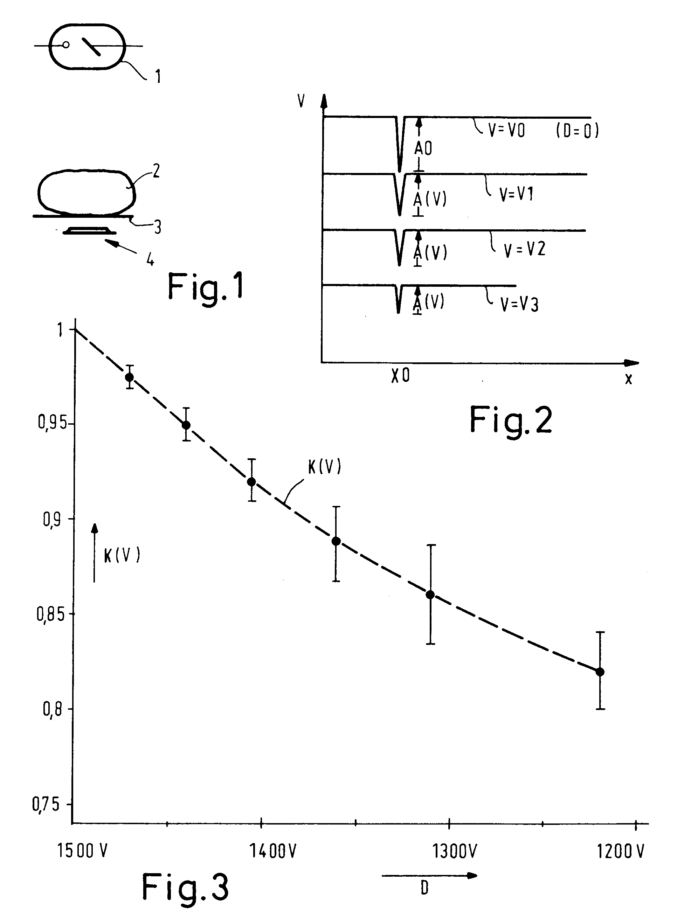

In Fig. 1 ist mit 1 ein Röntgenstrahler bezeichnet, der ein Untersuchungsobjekt 2, beispielsweise einen Patienten, durchstrahlt, der sich auf einer Tischplatte 3 befindet. Unterhalb der Tischplatte befindet sich ein Aufzeichnungsträger 4, der aus einem Aluminiumsubstrat besteht, auf das eine homogene, 500 $\mu$m starke Selenschicht aufgedampft ist. Diese Schicht wird durch eine nicht näher dargestellte Aufladeeinrichtung vor jeder Aufnahme örtlich gleichmäßig auf eine Spannung von 1500 Volt (gegenüber dem Substrat) aufgeladen. Bei einer Röntgenaufnahme wird das Röntgenschattenbild des Objektes 2 auf den Aufzeichnungsträger 4 projiziert, wobei die Leitfähigkeit, die vor Beginn der Aufnahme sehr gering - im Idealfall Null - ist, in der Selenschicht erhöht wird, und zwar je nach der Intensität der durch den Körper 2 geschwächten Röntgenstrahlung an dem betreffenden Bildpunkt (mit Bildpunkt ist hierbei und im folgenden nicht ein Punkt im mathematischen Sinne bezeichnet, sondern ein endlicher vorzugsweise quadratischer Bereich der Oberfläche der Selenschicht mit einer Größe von z.B. 200 $\mu$m x 200 $\mu$m). Dadurch wird die Oberfläche der Selenschicht mehr oder weniger entladen, und zwar um so mehr, je länger die Aufnahme dauert, so daß die Entladungstiefe ein Maß für die Dosis ist. Mit anderen Worten: das Röntgenschattenbild des Objektes 2 wird auf der Oberfläche der Selenschicht in ein Ladungsbild umgesetzt. Dieses Ladungsbild wird von einer Elektrometeranordnung abgetastet, und die dabei erzeugten elektronischen Signale werden verstärkt und digitalisiert, so daß eine digitale Bildverarbeitung möglich ist.

In der Praxis besitzt die Selenschicht jedoch Defektstellen, d.h. kleine, meist punktförmige Bereiche, die auch ohne Röntgenstrahlung eine mehr oder weniger große Leitfähigkeit aufweisen, so daß die Oberfläche an diesen Stellen unabhängig von der Röntgenstrahlung entladen wird. Es leuchtet ein, daß die an dieser Stelle u.a. mit Hilfe der Elektrometeranordnung in einen Bildwert umgesetzte Ladungsdichte in dem aus den Bildwerten zusammengesetzten Röntgenbild eine Störung, einen Artefakt, verursacht.

Die Herstellung der Selenschicht derart, daß solche Defekte nicht auftreten oder nur in einer Anzahl, die den Bildeindruck nicht stört, ist außerordentlich schwierig und aufwendig. Es hat sich aber gezeigt, daß die Anzahl und die Amplitude der Artefakte bei größerer Aufladehöhe der Selenplatten überproportional zunimmt. Daher ist es zweckmäßig, die Spannung, auf die die Oberfläche vor der Belichtung aufgeladen wird, und die Dicke der Selenschicht so zu bemessen, daß die elektrische Feldstärke in der Selenschicht deutlich kleiner ist als 10 V/$\mu$m - ein Wert, der bei der Anordnung nach der US-PS 4,134,137 sogar noch geringfügig überschritten wird. Auf der anderen Seite darf diese Feldstärke aber nicht zu niedrig gewählt werden, weil sonst das Signal/Rauschverhältnis an den defektfreien Stellen zu sehr abnimmt. Die elektrische Feldstärke sollte daher zwischen 2 V/$\mu$m und 4 V/$\mu$m liegen.

Auch bei diesen Werten findet man im allgemeinen noch eine Anzahl von Defektstellen (Fehlstellen) mit Dunkelentladungsgeschwindigkeiten, die in den meisten Fällen um rund 20 V/min liegen, die aber in der Regel einen Wert von 100 V/min nicht überschreiten. An den defektfreien Stellen hingegen beträgt die Dunkelentladungsgeschwindigkeit bei den gleichen Bedingungen nur 2-5 V/min. Auch wenn die Zeit zwischen dem Ende der Aufladung und dem Beginn der Abtastung relativ kurz gewählt ist - ein geeigneter Wert liegt bei maximal 30 sec. - und wenn die Abtastung durch die Elektrometeranordnung in sehr kurzer Zeit erfolgen kann, läßt sich nicht vermeiden, daß die an den Defektstellen im Röntgenbild erzeugten Artefakte dessen Auswertung erheblich stören.

Die Erfindung nutzt die Tatsache aus, daß die Ladung an der Oberfläche der Selenschicht sich an den Defektstellen auch dann verringert, wenn diese überhaupt nicht von Röntgenstrahlung getroffen werden. Wird daher ein Dunkelentladungsbild angefertigt, d.h. ein Bild, bei dem der Fotoleiter in dem Zeitraum zwischen dem Ende der Aufladung und der Abtastung nicht von Röntgenstrahlung getroffen wird, dann zeigt dieses Bild an den gleichen Stellen wie das durch die Röntgenaufnahme erzeugte Röntgenbild Artefakte. Subtrahiert man daher das Dunkelentladungsbild bzw. die Bildwerte, aus denen sich dieses Bild zusammensetzt, Punkt für Punkt von den Bildwerten des durch eine Röntgenaufnahme erzeugten Röntgenbildes, dann ergibt sich schon eine Reduzierung der Artefakte, allerdings mit zwei Einschränkungen:

a. Es genügt nicht, wenn man für einen Aufzeichnungsträger einmal ein Dunkelentladungsbild anfertigt und dies von allen Röntgenbildern subtrahiert. Das Dunkelentladungsverhalten der Selenschicht ändert sich nämlich durch Röntgenstrahlung, und zwar um so stärker, je höher die bei einer Aufnahme empfangene Dosis ist. Daher reicht es nicht aus, ein solches Dunkelentladungsbild nur einmal täglich oder noch seltener aufzunehmen. Es empfiehlt sich, ein solches Dunkelentladungsbild möglichst nach jeder Aufnahme neu aufzunehmen und für das mit der darauffolgenden Röntgenaufnahme erzeugte Röntgenbild zu verwenden. Bei hoher Bildfolgefrequenz kann darauf gegebenenfalls verzichtet werden. Außerdem ist es möglich, die Entscheidung, ob ein neues Dunkelentladungsbild aufgenommen werden soll, von der Höhe der vorausgegangenen Belichtung und damit von der zu erwartenden Änderung des Dunkelentladungsverhaltens abhängig zu machen. - Wichtig ist auch, daß die Zeit zwischen der Aufladung des Aufzeichnungsträgers und dem Abtasten des Entladungsbildes konstant gehalten wird.

b. Es zeigt sich weiterhin, daß eine exakte Korrektur des Röntgenbildes durch Subtraktion des Dunkelentladungsbildes nicht möglich ist. Die Gründe dafür lassen sich anhand der Fig. 2 erläutern, die den Verlauf der Ladungsdichte bzw. des Oberflächenpotentials als Funktion des Ortes bei verschiedenen Bestrahlungsdosen darstellt.

Eine erste Kurve zeigt dabei das Potential V an der Oberfläche der Selenschicht bei der Dosis Null, d.h. bei einem Dunkelentladungsbild, bei dem zwischen der Aufladung und der Abtastung keine Röntgen-Bestrahlung der Schicht erfolgt. Das Potential hat daher an der Oberfläche im wesentlichen den Wert V = Vo, wobei Vo die Spannung ist, auf die die Oberfläche aufgeladen ist. Nur an der Stelle x = xo, an der sich eine Defektstelle befindet, ist das Potential um den Wert Ao niedriger. Fig. 2 zeigt das Oberflächenpotential längs der gleichen Geraden nach einer örtlich gleichmäßigen Belichtung des Aufzeichnungsträgers jeweils mit unterschiedlichen Dosen. Man erkennt, daß mit abnehmenden Oberflächenpotential an den defektfreien Stellen, d.h. mit zunehmender Dosis, die Abweichung A(V) an der Defektstelle gegenüber der Umgebung immer niedriger wird.

Wenn daher das Dunkelentladungsbild von dem Röntgenbild subtrahiert wird, wird der Artefakt an der Defektstelle x = xo überkompensiert: Während das nicht korrigierte Röntgenbild den Eindruck erweckt, als hätte der Aufzeichnungsträger an der Stelle x = xo eine größere Dosis erfaßt, erweckt das durch Subtraktion des Dunkelentladungsbildes vom Röntgenbild erzeugte korrigierte Röntgenbild den Eindruck als sei an der Defektstelle von weniger Röntgenstrahlung getroffen worden. Zur Beseitigung dieses Restfehlers ist es erforderlich, das Röntgenbild entsprechen der Gleichung

$$B(x,y) = V(D;x,y) - Vo - (V(0;x,y)-Vo) * K(V;x,y) \quad - (1)$$

zu korrigieren.

Dabei ist $B(x,y)$ der Bildwert des Röntgenbildes mit Ortskoordinaten $x,y$, wobei die xy-Ebene parallel zur Oberfläche der Selenschicht verläuft. $V(D;x,y)$ ist das Oberflächenpotential in diesem Bildpunkt bei einer Röntgenaufnahme, während die Differenz zwischen diesem Oberflächenpotential und dem Wert Vo (1500 Volt im Ausführungsbeispiel) dem Bildwert des nicht korrigierten Röntgenbildes entspricht. $V(0;x,y)$ bezeichnet das Oberflächenpotential dieses Bildpunktes im Dunkelentladungsbild, während die Differenz mit Vo dem Bildwert für diesen Bildpunkt im Dunkelentladungsbild entspricht. $K(V;x,y)$ bezeichnet einen Korrekturfaktor, der diesem Bildpunkt zugeordnet ist und der sich für die in Fig. 2 untersuchte Defektstelle aus der Beziehung

$$A(V)/Ao$$

errechnet und von dem jeweiligen Oberflächenpotential (V1, V2 und V3) abhängig ist.

Die Durchführung des Korrekturverfahrens nach dieser Formel erfordert allerdings, daß zunächst die Ortskoordinaten x,y ermittelt werden, indem beispielsweise das Dunkelentladungsbild abgetastet wird und die Koordinaten aller Bildpunkte, in denen das Oberflächenpotential einen vorbestimmten Wert unterschreitet, gespeichert werden, und daß für jede der derart ermittelten Defektstellen die Abhängigkeit des Korrekturfaktors K vom Oberflächenpotential ermittelt wird, in dem eine Reihe von mit unterschiedlichen Dosen gleichmäßig belichteten Röntgenbildern angefertigt und die Abweichung A gegenüber dem Oberflächenpotential in der defektfreien Umgebung gemessen wird. Es leuchtet ein, daß eine solche Korrektur einen erheblichen Aufwand an Rechenzeit und Speicherplatz erfordert, wobei noch erschwerend hinzukommt, daß die Tabelle, in der die Ortskoordinaten der Defektstellen und die Dosisabhängigkeit des Korrekturfaktors gespeichert sind, aufgrund der von der Röntgenstrahlung abhängigen Änderung des Dunkelentladungsverhaltens von Zeit zu Zeit erneuert werden muß.

Es hat sich jedoch gezeigt, daß die Korrekturfaktoren, die man so wie in Verbindung mit Gleichung (1) und Fig. 2 erläutert berechnet hat, eine relativ geringe Variationsbreite aufweisen, und es ist daher möglich, mit Korrekturfaktoren K(V) zu korrigieren, die nur noch von der Dosis bzw. vom Oberflächenpotential abhängen, nicht aber von der Ortskoordinate der jeweiligen Defektstelle. Hierzu wird auf Fig. 3 verwiesen.

Fig. 3 zeigt als Funktion des Oberflächenpotentials bzw. - weil Oberflächenpotential und Dosis praktisch linear miteinander verknüpft sind - als Funktion der Dosis den Korrekturfaktor K(V), d.h. die Amplitude A eines Artefaktes, normiert auf ihren Wert Ao im Dunkelentladungsbild. Die für verschiedene Oberflächenpotentiale bzw. Dosen sich ergebenden Variationsbreiten sind durch die vertikalen Fehlerbalken angedeutet, wobei durch einen Punkt der arithmetische Mittelwert der Korrekturfaktoren für die verschiedenen Defektstellen bei der betreffenden Oberflächenpotential angedeutet ist. Wegen der geringen Variationsbreite dieser Korrekturfaktoren ist es möglich, alle Defektstellen mit einem Korrekturfaktor zu belegen, der von der Defektstelle bzw. ihrer Lage x,y im Bild unabhängig ist und der nur von der Dosis D bzw. von dem Oberflächenpotential V abhängt. Der Verlauf des Korrekturfaktors K(V) als Funktion der Oberflächendichte ist in Fig. 3 mit einer gestrichelten Linie angedeutet, die die bei verschiedenen Dosen bzw. Oberflächenpotentialen ermittelten Mittelwerte miteinander verbindet. Da es sich dabei um Mittelwerte handelt, ist es auch nicht erforderlich, diese Kurve bei einer Änderung des Dunkelentladungsverhaltens nach einer Röntgenbelichtung neu aufzunehmen.

Es genügt daher, sie nur ein einziges Mal zu ermitteln und in einem Speicher zu behalten, der dem Aufzeichnungsträger zugeordnet ist.

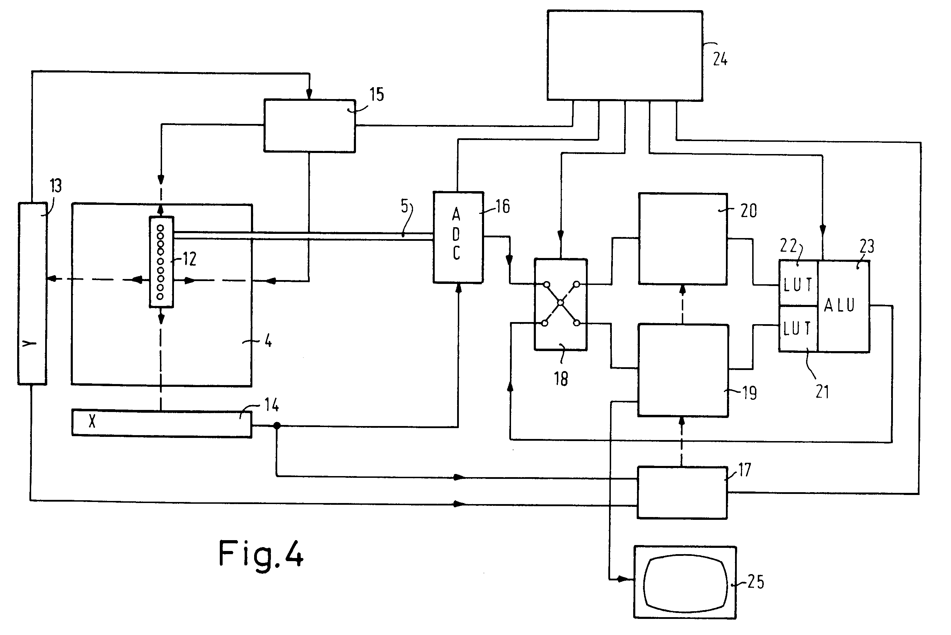

In Fig. 4 ist eine Anordnung zur Durchführung des auf diese Weise modifizierten Korrekturverfahrens gemäß Gleichung (1) vorgesehen. Die Oberfläche der Selenschicht des Aufzeichnungsträgers 4 wird mit einer Elektrometeranordnung 12 abgetastet, die eine Anzahl von Elektrometersonden enthält, von denen jede die Ladungsdichte bzw. das Oberflächenpotential in einem Bildpunkt erfaßt. Geeignete Elektrometeranordnungen sind u.a. in der DE-OS 29 48 660 und in der DE-OS 35 05 615 beschrieben. Damit das Oberflächenpotential sämtlicher Bildpunkte auf dem Aufzeichnungsträger erfaßt werden kann, muß die Elektrometeranordnung in zwei zueinander senkrechten Richtungen relativ zum Aufzeichnungsträger 4 verschoben werden. Diesem Zweck dient eine programmierbare Scan-Steuerung 15, die ihrerseits von einem geeigneten Prozeßrechner bzw. einem Host-Rechner 24 gesteuert wird. Die jeweilige Position der Elektrometeranordnung wird zur Scan-Steuerung zurückgemeldet.

Die Elektrometeranordnung 12 kann für jede Elektrometersonde einen nachgeschalteten Verstärker und eine Abtast- und Halteschaltung enthalten, deren Ausgangssignale über einen nicht näher dargestellten analog wirkenden Multiplexer und eine Leitung 5 dem Eingang eines Digital-Analog-Wandlers 16 zuführen. Dieser setzt die als Analogsignale anliegenden Werte des Oberflächenpotentials in den einzelnen Bildpunkten in digitale Datenworte mit einer Wortbreite von 16 Bit um. Die Strobe-Signale für den Analog-Digital-Wandler 16 können von dem x Positionsgeber 14 erzeugt werden (falls die Elektrometeranordnung zunächst in x-Richtung und danach in y-Richtung verschoben wird). Die auf diese Weise erzeugten digitalen Datenworte werden über einen Schalter 18 einem Bildspeicher 19 zugeführt, dessen Speicherkapazität ausreicht, um die sämtlichen Bildpunkten eines Röntgenoder Dunkelentladungsbildes zugeordneten Werte zu speichern. Die Adresse, unter der das jeweilige Datenwort gespeichert wird, wird durch einen Adressengenerator 17 bestimmt, der von den x- und y-Positionsgebern 14 und 13 gesteuert wird.

Außerdem ist ein zweiter Bildspeicher 20 mit der gleichen Speicherkapazität wie der Bildspeicher 19 vorgesehen. Die beiden Bildspeicher 19 und 20 sind über je einen Tabellenspeicher (look-up-tables), die über den Host-Rechner 24 gesetzt werden können, mit einer arithmetisch logischen Einheit 23 verbunden. Deren Ausgang ist über den Schalter 18 wahlweise mit dem Dateneingang der Bildspeicher 19 oder 20 verbunden.

Die Anordnung arbeitet - gesteuert durch den Host-Rechner 24 - wie folgt:
Es wird zunächst ein Dunkelentladungsbild angefertigt, d.h. eine bestimmte Zeit nach einer Aufladung der Oberfläche des Aufzeichnungsträgers 4 wird das Oberflächenpotential mit Hilfe der Elektrometeranordnung 12 gemessen, ohne daß der Aufzeichnungsträger einer Röntgenstrahlung ausgesetzt wird. Die sich in diesem Dunkelentladungsbild für die einzelnen Bildpunkte ergebenden, dem Oberflächenpotential V(0;x,y) entsprechenden Datenworte werden in den Speicher 20 abgelegt. Anschließend wird eine Röntgenaufnahme angefertigt, wobei der Zeitraum zwischen dem Ende der Aufladung und dem Beginn der Abtastung genauso groß sind und die Abtastung der Oberfläche durch die Elektrometeranordnung zeitlich und räumlich nach dem gleichen Raster durchgeführt wird wie bei dem Dunkelentladungsbild. Die Datenworte für das auf diese Weise erzeugte Röntgenbild werden in dem Bildspeicher 19 gespeichert.

Danach wird in den Tabellenspeicher 22 eine Funktion f(V) = V und in den Tabellenspeicher 21 eine Funktion f(V) = -Vo = const) geladen. Diese Tabellenspeicher interpretieren in bekannter Weise die aus dem Speicher ausgelesenen Datenworte V als Adressen, unter denen in dem Tabellenspeicher die zugehörigen Funktionswerte f(V) gespeichert sind. Die auf diese Weise von den Tabellenspeichern 21 und 22 gelieferten Tabellenwerte werden in der arithmetisch logischen Einheit 23 addiert und in den Speicher 20 rückgeführt (unter die zuvor ausgelesene Adresse). Wenn dies für alle Bildpunkte wiederholt worden ist, befinden sich im Bildspeicher 20 die Bildwerte (V(0;x,y)-Vo) des Dunkelentladungsbildes.

Im nächsten Verarbeitungsschritt wird in dem Tabellenspeicher 21 eine Funktion f(V) = 1n(K(V)) und in den Tabellenspeicher 22 eine Funktion f(V)-= 1n(V) geladen. Die von den Tabellenspeichern 21 und 22 dann der arithmetisch logischen Einheit 23 zugeführten Werte werden in dieser Einheit addiert und in dem Speicher 20 unter der Adresse des gerade aufgerufenen Wertes abgelegt. Durch diese Rechenoperation wird der Logarithmus des Produktes des aus dem Röntgenbild im Speicher 19 abgeleiteten Korrekturfaktors K(V) und des Bildwertes des Dunkelentladungsbildes für den gleichen Bildpunkt gebildet. Dies wird für alle Bildpunkte wiederholt.

Im dritten Verarbeitungsschritt wird in den Tabellenspeicher 21 die Funktion f(V) = 0 geladen (d.h. der Tabellenspeicher liefert unabhängig von dem Datenwort an seinem Eingang den Wert Null), während in den Tabellenspeicher 22 die Funktion f-(V) = exp(V) geladen wird. Die dabei von den Tabellenspeichern gelieferten Werte werden in der arithmetisch logischen Einheit 23 wiederum addiert und in den Speicher 20 unter der gleichen Adresse geladen, die zuvor aufgerufen wurde. Das Ergebnis dieser Rechenoperation ist, daß die Logarithmierung des Produktes im vorangegangenen Verarbeitungsschritt wieder rückgängig gemacht wird, so daß im Speicher 20 das erwähnte Produkt für den entsprechenden Bildpunkt gespeichert wird. Dies wird wiederum für sämtliche Bildpunkte wiederholt.

Im vierten Verarbeitungsschritt wird in den Speicher 21 die Funktion f(V) = V und in den Speicher 12 die Funktion f(V) = -Vo geladen (der Tabellenspeicher 22 liefert also in diesem Fall unabhängig vom Datenwort an seinem Eingang am Ausgang ein dem Wert -v0 entsprechendes Datenwort. Die arithmetisch logische Einheit addiert wiederum die von den Tabellenspeichern gelieferten Werte, die diesmal in den Speicher 19 unter der zuvor aufgerufenen Adresse gespeichert werden. Diese Rechenoperation bewirkt die Berechnung der Bildwerte (V(D;x,y)-Vo) des Röntgenbildes. Am Ende dieses Verarbeitungsschrittes enthält also der Speicher 19 die Bildwerte des Röntgenbildes. Im letzten Verarbeitungsschritt wird in den Speicher 21 die Funktion f(V) = vvund in den Tabellenspeicher 22 die Funktion f(V)-V geladen. Die von den Tabellenspeichern gelieferten Werte werden wiederum in der arithmetisch logischen Einheit addiert und das Ergebnis wird in den Speicher 19 geladen. Dieser Verarbeitungsschritt liefert die Bildwerte B(x,y) des korrigierten Röntgenbildes gemäß Gleichung(1).

Der Speicher 19, in dem nach Abschluß dieses Verarbeitungsschrittes die Bildwerte des korrigierten Röntgenbildes gespeichert sind, kann als Hintergrundspeicher einer Bildwiedergabeeinheit 25 dienen, z.B. eines Bildmonitors. Das korrigierte Röntgenbild erscheint dann ohne weiteren Zeitverlust auf diesem Bildmonitor. Zu Archivierungszwecken kann der Speicher über den Host-Rechner 14 gegebenenfalls auch ausgelesen werden.

Wie sich aus der vorhergehenden Beschreibung ergibt, wird jeder Bildpunkt - also nicht nur die Bildpunkte, an denen sich eine Defektstelle befindet - der durch Gleichung (1) definierten Korrektur unterworfen. Da im Dunkelentladungsbild der Bildwert für einen Bildpunkt an einer defektfreien Stelle im Idealfall jedoch Null ist, wird dadurch die Korrektur für das korrigierte Röntgenbild nicht verändert und die Korrektur wird lediglich bei den Bildpunkten bzw. Bildwerten wirksam, die einer Defektstelle zugeordnet sind.

In der Praxis sind jedoch an den defektfreien Stellen die Bildwerte im Dunkelentladungsbild nicht Null; auch dort ändert sich nämlich das Oberflächenpotential durch eine Dunkelentladung, wenn auch um eine Größenordnung langsamer als an den Defektstellen. Diese Änderung hängt davon ab, wann der betreffende Bildpunkt abgetastet wird. Beträgt die Abtastzeit für den gesamten Aufzeichnungsträger beispielsweise 30 sec, so können die zuletzt abgetasteten Bildpunkte durch Dunkelentladung um mehr als 1 Volt tiefer liegen als die zuerst abgetasteten Bildpunkte. Dies führt zu einer noch sichtbaren Beeinträchtigung der Bildqualität. Durch das erfindungsgemäße Verfahren werden auch diese Effekte beseitigt.

Verringert sich z.B. bei einer Röntgenaufnahme das Oberflächenpotential in einem Bildpunkt um 0,9 Volt bevor es abgetastet wird, dann verringert es sich in dem Dunkelentladungsbild noch etwas stärker - z.B. um 0,95 Volt - , weil das Oberflächenpotential zu Beginn der Entladung hier höher ist als in dem belichteten Bild. Gemäß Gleichung (1) wird dieser etwas größere Wert jedoch mit einem Faktor multipliziert, der etwas kleiner ist als 1, so daß die Differenz im korrigierten Bildpunkt praktisch verschwindet.

**Patentansprüche**

1. Verfahren zum Erzeugen einer Röntgenaufnahme mittels eines Röntgenstrahlung umsetzenden Fotoleiters, der vor der Röntgenaufnahme örtlich gleichmäßig aufgeladen, während der Röntgenaufnahme in Abhängigkeit von der Röntgenstrahlungsintensität entladen wird und dessen Oberfläche nach der Röntgenaufnahme zur Erfassung der Ladungsdichte abgetastet wird, wobei für jeden Bildpunkt ein der Entladung an dem betreffenden Bildpunkt entsprechender Bildwert gebildet wird, dadurch gekennzeichnet, daß zur Korrektur der Bildwerte vor der Röntgenaufnahme oder nach dem Abtasten der Bildwerte der Fotoleiter aufgeladen und ohne Bestrahlung abgetastet wird, daß die Bildwerte des Röntgenbildes und/oder des Dunkelentladungsbildes mit einem von der Ladungsdichte des zugeordneten Bildpunktes bei der Röntgenaufnahme abhängigen Korrekturfaktor multipliziert werden, der umso kleiner ist, je geringer die Ladungsdichte bei der Röntgenaufnahme ist, und daß jeder Bildwert des Dunkelentladungsbildes bzw. ein daraus abgeleiteter Wert von dem Bildwert des Röntgenbildes für den gleichen Bildpunkt bzw. einem daraus abgeleiteten Wert subtrahiert wird.

2. Verfahren nach Anspruch 1, dadurch gekennzeichnet, daß zur Bestimmung des Korrekturfaktors als Funktion der Ladungsdichte eine Anzahl von Röntgenaufnahmen erstellt wird, wobei die gesamte Fotoleiterschicht örtlich gleichmäßig mit jeweils einer bestimmten Dosis belichtet wird, daß für die dabei an den defektfreien Stellen jeweils gemessene Ladungsdichte (V(D;x,y) als Korrekturfaktor der Wert gespeichert wird, der sich aus dem Quotienten der Differenz (A(D)) zwischen dieser Ladungsdichte und der Ladungsdichte an einer Defektstelle zu der entsprechenden Differenz (A(o)) im Dunkelentladungsbild ergibt, und daß die Bildwerte (V(o;x,y)-Vo) des Dunkelentladungsbildes mit den so ermittelten Korrekturfaktoren (K(V)) multipliziert werden, bevor sie von den Bildwerten des Röntgenbildes subtrahiert werden.

3. Verfahren nach einem der vorhergehenden Ansprüche, dadurch gekennzeichnet, daß der zeitliche Abstand zwischen dem Ende der Aufladung des Fotoleiters und der Abtastung der Ladungsdichte bei der Erzeugung des Dunkelentladungsbildes zumindest annähernd gleich groß ist wie der entsprechende Abstand bei der Erzeugung des Röntgenbildes.

4. Anordnung zur Durchführung des Verfahrens nach Anspruch 1 mit einer Röntgenstrahlenquelle, (1) einem auf einem leitenden Substrat als homogene Schicht aufgebrachten Fotoleiter (4), einer Elektrometeranordnung (12) zur Erfassung der Ladungsdichte an einzelnen (Bild-) Punkten der Fotoleiterschicht, einer ersten Speicheranordnung (19) zum Speichern der Bildwerte des Röntgenbildes und mit einer Wiedergabeeinheit (25) zur Wiedergabe der räumlichen Verteilung der Intensität der Röntgenstrahlung, dadurch gekennzeichnet, daß eine zweite Speicheranordnung (20) zur Aufnahme der Bildwerte eines Dunkelentladungsbildes vorgesehen ist, daß Mittel (21...23) vorgesehen sind zur Bildung der Differenz von in den beiden Speicheranordnungen für jeweils den gleichen Bildpunkt gespeicherten Bildwerten bzw. daraus abgeleiteten Werten, und daß die Differenz der Wiedergabeeinheit zuführbar ist.

5. Anordnung nach Anspruch 4, wobei der Fotoleiter im wesentlichen aus Selen besteht, dadurch gekennzeichnet, daß die Aufladespannung und die Dicke der Selenschicht so gewählt sind, daß die Feldstärke in der Selenschicht zwischen 2 Volt/$\mu$m und 4 Volt/$\mu$m liegt.

6. Anordnung nach Anspruch 4 zur Durchführung des Verfahrens nach Anspruch 1 oder 2, dadurch gekennzeichnet, daß die Korrekturfaktoren (K(V))in einem Tabellenspeicher (21) gespeichert sind, der bei Eingabe eines die Ladungsdichte kennzeichnenden Datenwortes den zugehörigen Korrekturfaktor als Datenwort ausgibt.

**Claims**

1. A method for producing an X-ray image by means of a photoconductor which converts X-rays, which is locally uniformly charged prior to the X-ray exposure, and which is discharged during the X-ray exposure in dependence on the intensity of the X-radiation, its surface being scanned after the X-ray exposure in order to determine the charge density, for each pixel there being formed an image value which corresponds to the discharge at the respective pixel, characterized in that for the correction of image values the photoconductor is charged and scanned without radiation prior to the X-ray exposure or after the scanning of the image values, the image values of the X-ray image and/or the dark discharge image being multiplied by a correction factor which is dependent on the charge density of the respective pixel during the X-ray exposure and which is smaller as the charge density during the X-ray exposure is lower, each image value of the dark discharge image, or a value derived therefrom, being subtracted from the image value of the X-ray image for the same pixel, or from a value derived therefrom.

2. A method as claimed in Claim 1, characterized in that in order to determine the correction factor as a function of the charge density, a number of X-ray exposures is produced, for which the whole photoconductive layer is each time locally uniformly exposed to a specific dose, that for the respective charge density (V-(D;x,y) then measured at the locations without defect a correction factor is stored in the form of the value resulting from the quotient of the difference (A(D)) between this charge density and the charge density at a defect location to the corresponding difference (A(o)) in the dark discharge image, and that the image values (V-(o;x,y) - Vo) of the dark discharge image are multiplied by the correction factors (K(V)) thus determined before they are subtracted from the image values of the X-ray image.

3. A method as claimed in any one of the preceding Claims, characterized in that the time interval between the end of charging of the photoconductor and scanning of the charge density during the production of the dark discharge image is at least approximately equal to the corresponding interval during the production of the X-ray image.

4. An arrangement for carrying out the method claimed in Claim 1, comprising an X-ray source (1), a photoconductor (4) deposited as a homogeneous layer on a conductive substrate, an electrometer arrangement (12) for detecting the charge density at individual points (pixels) of the photoconductive layer, a first storage arrangement (19) for storing the image values of the X-ray image, and a display unit (25) for displaying the spatial distribution of the intensity of the X-radiation, characterized in that there are provided a second storage arrangement (20) for storing the image values of a dark discharge image, and means (21...23) for forming the difference between image values, or values derived therefrom, stored in the two storage arrangements for the same pixel, and that the difference can be fed to the display unit.

5. An arrangement as claimed in Claim 4, in which the photoconductor consists essentially of selenium, characterized in that the charging voltage and the thickness of the selenium layer are chosen so that the field strength in the selenium layer is between 2 volt/μm.

6. An arrangement as claimed in Claim 4 for carrying out the method claimed in Claim 1 or 2, characterized in that the correction factors (K(V)) are stored in a lookup table (21) which when a data word characterizing the charge density is input, outputs the relevant correction factor as a data word.

**Revendications**

1. Procédé de production d'une radiographie à l'aide d'un photoconducteur convertissant les rayons X, qui est chargé localement uniformément avant la radiographie, est déchargé au cours de la radiographie en fonction de l'intensité des rayons X et dont la surface est échantillonnée après la radiographie pour enregistrer la densité de charge, étant entendu que, pour chaque point d'image, une valeur d'image correspondant à la décharge au point d'image en question est formée, caractérisé en ce que, pour corriger les valeurs d'image avant la radiographie ou après l'échantillonnage des valeurs d'image, le photoconducteur est chargé et est échantillonné sans exposition au rayonnement, les valeurs d'image de l'image de rayons X et/ou de l'image de décharge sombre sont multipliées par un facteur de correction dépendant de la densité de charge du point d'image associé lors de la radiographie, ce facteur étant d'autant plus petit que la densité de charge est faible lors de la radiographie, et chaque valeur d'image de l'image de décharge sombre ou une valeur qui en découle est soustraite de la valeur d'image de l'image radiographique pour le même point d'image ou d'une valeur qui en est déduite.

2. Procédé selon la revendication 1, caractérisé en ce que, pour déterminer le facteur de correction en fonction de la densité de charge, on effectue un certain nombre de radiographies, la totalité de la couche photoconductrice étant irradiée localement de manière uniforme chaque fois avec une dose déterminée, on stocke comme facteur de correction pour la densité de charge (V(D;x,y)) mesurée respectivement aux points sans défaut, la valeur qui est obtenue en divisant la différence (A(D)) entre cette densité de charge et la densité de charge sur un point défectueux par la différence correspondante (A(o)) dans l'image de décharge sombre, et on multiplie les valeurs (V(0;x,y)-Vo) de l'image de décharge sombre par les facteurs de correction ainsi obtenus (K(V)) avant qu'elles ne soient soustraites des valeurs d'image de l'image radiographique.

8

3. Procédé selon l'une quelconque des revendications précédentes, caractérisé en ce que l'intervalle de temps s'écoulant entre la fin de la charge du photoconducteur et l'échantillonnage de la densité de charge lors de la production de l'image de décharge sombre est au moins presque aussi important que l'intervalle de temps correspondant pour la production de l'image radiographique.

4. Agencement de réalisation du procédé selon la revendication 1, comportant une source de rayons X (1), un photoconducteur (4) appliqué sous la forme d'une couche homogène sur un substrat conducteur, un dispositif électrométrique (12) pour enregistrer la densité de charge sur des points (d'image) individuels de la couche photoconductrice, un premier agencement de mémoire (19) pour stocker les valeurs d'image de l'image radiographique et une unité de reproduction (25) pour reproduire la répartition spatiale de l'intensité des rayons X, caractérisé en ce qu'il est prévu un deuxième agencement de mémoire (20) pour stocker les valeurs d'image de l'image de décharge sombre, des moyens (21...23) pour former la différence de valeurs d'image stockées dans les deux agencements de mémoire pour le même point d'image ou de valeurs qui en découlent, et la différence peut être acheminée à l'unité de reproduction.

5. Agencement selon la revendication 4, dans lequel le photoconducteur est constitué en substance de sélénium, caractérisé en ce que la tension de charge et l'épaisseur de la couche de sélénium sont choisies, de telle sorte que l'intensité du champ dans la couche de sélénium soit comprise entre 2 volts par micromètre et 4 volts par micromètre.

6. Agencement selon la revendication 4 pour réaliser le procédé de la revendication 1 ou 2, caractérisé en ce que les facteurs de correction (K(V)) sont stockés dans une mémoire de tableaux (21) qui fournit le facteur de correction associé comme mot de données lorsqu'un mot de données caractérisant la densité de charge y est introduit.

Fig.1

Fig.2

Fig.3

Fig.4

EP 0 212 733 B1